# EUROPÄISCHE PATENTSCHRIFT

(11) **EP 4 281 225 B1**
(45) Veröffentlichungstag und Bekanntmachung des Hinweises auf die Patenterteilung: **16.07.2025**
(21) Anmeldenummer: 22700793.7
(22) Anmeldetag: 17.01.2022
(51) Int. Cl.: B05B 5/16, B05B 13/04, B25J 11/00, B25J 13/08, B25J 19/00, B25J 19/06, B05B 12/00

(54) **BESCHICHTUNGSEINRICHTUNG MIT EINER ÜBERTRAGUNGSEINRICHTUNG ZUR DRAHTLOSEN ÜBERTRAGUNG VON ENERGIE UND/ODER DATEN**
COATING DEVICE WITH A TRANSFER DEVICE FOR WIRELESS TRANSFER OF POWER AND/OR DATA
DISPOSITIF DE REVÊTEMENT MUNI D'UN DISPOSITIF DE TRANSMISSION SANS FIL DE PUISSANCE ET/OU DE DONNÉES

(30) Priorität: 19.01.2021 DE 102021101026
(43) Veröffentlichungstag der Anmeldung: 29.11.2023
(73) Patentinhaber: Dürr Systems AG, 74321 Bietigheim-Bissingen (DE)
(72) Erfinder: POPPE, Siegfried, 71706 Unterriexingen (DE); HÖCHSMANN, Johannes, 71679 Asperg (DE); KEILBACH, Martin, 74214 Oberkessach (DE)
(74) Vertreter: v. Bezold & Partner Patentanwälte - PartG mbB
(86) Internationale Anmeldenummer: PCT/EP2022/050842
(87) Internationale Veröffentlichungsnummer: WO 2022/157101

(56) Entgegenhaltungen:
- EP-A2- 1 232 799
- WO-A1-2008/037456
- DE-A1- 10 309 143
- JP-A- 2016 007 586
- US-A1- 2007 276 538

## Beschreibung

Die Erfindung betrifft eine Beschichtungseinrichtung (z.B. Lackierroboter) zur Beschichtung von Bauteilen (z.B. Kraftfahrzeugkarosseriebauteile).

In modernen Lackieranlagen zur Lackierung von Kraftfahrzeugkarosseriebauteilen werden als Applikationsgeräte üblicherweise Rotationszerstäuber eingesetzt, die eine elektrostatische Beschichtungsmittelaufladung aufweisen, um einen großen Auftragswirkungsgrad zu erreichen, damit möglichst wenig Overspray anfällt. Während des Lackierbetriebs befindet sich der Rotationszerstäuber hierbei auf einem Hochspannungspotenzial, damit der applizierte Lack auf Hochspannungspotenzial aufgeladen wird. Hierbei können sich in dem Rotationszerstäuber elektrisch betriebene Verbraucher (z.B. Sensoren) befinden, die mit Strom versorgt werden müssen. Eine kabelgebundene Stromversorgung der Verbraucher ist jedoch problematisch, weil sich der Rotationszerstäuber und damit auch der zu versorgende Verbraucher auf einem Hochspannungspotenzial befinden, was eine Potenzialtrennung erforderlich machen würde. Darüber hinaus können elektrische Verbraucher nicht nur in dem Rotationszerstäuber angeordnet sein, sondern auch außerhalb des Rotationszerstäubers, z.B. an einem Roboterarm des Lackierroboters, in einem Farbwechsler oder in einer Dosierpumpe, wobei die Stromversorgung der elektrischen Verbraucher ebenfalls problematisch ist, Üblicherweise werden die elektrischen Verbraucher in derartigen Fällen durch Batterien mit dem zum Betrieb erforderlichen Strom versorgt.

Die Stromversorgung durch Batterien ist jedoch mit verschiedenen Nachteilen verbunden. So haben die Batterien nur eine relativ geringe Standzeit, d.h. die Batterien müssen relativ häufig ausgewechselt werden. Dies führt auch zu einem relativ hohen Ressourcenverbrauch, da regelmäßig neue Batterien benötigt werden und alte Batterien entsorgt werden müssen. Schließlich ist der Batterieverbrauch auch mit relativ hohen Kosten verbunden.

Zum allgemeinen technischen Hintergrund der Erfindung ist hinzuweisen auf WO 2008/037456 A1, DE 103 09 143 A1, JP 2016 007 586 A und US 2007/276538 A1.

Schließlich offenbart EP 1 232 799 A2 eine Beschichtungseinrichtung gemäß dem Oberbegriff von Anspruch 1. Diese bekannte Beschichtungseinrichtung ist jedoch nicht vollständig befriedigend. Der Erfindung liegt deshalb die Aufgabe zugrunde, eine entsprechend verbesserte Beschichtungseinrichtung zu schaffen, welche die vorstehend genannten Nachteile möglichst weitgehend vermeidet.

Diese Aufgabe wird durch eine erfindungsgemäße Beschichtungseinrichtung gemäß dem Hauptanspruch gelöst.

Die erfindungsgemäße Beschichtungseinrichtung dient zur Beschichtung von Bauteilen mit einem Beschichtungsmittel.

Vorzugsweise handelt es sich hierbei um eine Lackiereinrichtung zur Lackierung von Kraftfahrzeugkarosseriebauteilen, d.h. das verwendete Beschichtungsmittel ist ein Lack und die lackierten Bauteile sind Kraftfahrzeugkarosseriebauteile.

Die Erfindung ist jedoch hinsichtlich des verwendeten Beschichtungsmittels nicht auf Lacke beschränkt, sondern auch mit anderen Typen von Beschichtungsmitteln realisierbar, wie beispielsweise Dämmstoffe, Dichtmittel, Klebstoffe oder ähnliches.

Darüber hinaus ist die Erfindung auch hinsichtlich der zu beschichtenden Bauteile nicht auf Kraftfahrzeugkarosseriebauteile beschränkt, sondern eignet sich auch zur Beschichtung von andersartigen Bauteilen, wie beispielsweise Flugzeugbauteile.

Die erfindungsgemäße Beschichtungseinrichtung weist zunächst in Übereinstimmung mit dem vorstehend beschriebenen Stand der Technik mindestens einen elektrischen Verbraucher auf, der zum Betrieb elektrische Energie benötigt. Beispielsweise kann es sich bei dem Verbraucher um einen elektrisch betriebenen Sensor handeln, jedoch sind auch verschiedene andere Verbrauchertypen möglich, wie noch detailliert beschrieben wird.

Die erfindungsgemäße Beschichtungseinrichtung weist außerdem ein Übertragungssystem zur drahtlosen Übertragung der zum Betrieb des Verbrauchers erforderlichen elektrischen Energie zu dem Verbraucher und/oder zur Übertragung von Daten von und/oder zu dem mindestens einen Verbraucher auf.

Hierbei ist zu erwähnen, dass das Übertragungssystem den elektrischen Verbraucher (z.B. Sensor) direkt mit dem zum Betrieb erforderlichen Strom versorgen kann. Es ist jedoch alternativ auch möglich, dass das Übertragungssystem einen Pufferspeicher (z.B. Akkumulator) mit Strom versorgt, wobei der elektrische Verbraucher den zum Betrieb erforderlichen Strom dann aus dem Verbraucher bezieht.

Das erfindungsgemäße Übertragungssystem kann also verschiedene Funktionen erfüllen, nämlich zum einen die Übertragung von Energie und zum anderen die Übertragung von Daten. In dem bevorzugten Ausführungsbeispiel der Erfindung erfüllt das Übertragungssystem beide Funktionen, d.h. das Übertragungssystem überträgt zum einen die zum Betrieb des Verbrauchers erforderliche elektrische Energie drahtlos zu dem Verbraucher ermöglicht zum anderen eine Datenübertragung von dem Verbraucher und/oder zu dem Verbraucher. Die Erfindung umfasst jedoch auch andere Erfindungsvarianten, bei denen das Übertragungssystem nur zur Energieübertragung dient oder nur zur Datenübertragung.

Es wurde eingangs bereits zum Stand der Technik erwähnt, dass die Stromversorgung von elektrischen Verbrauchern in einem Hochspannungsbereich problematisch ist. Die erfindungsgemäße Beschichtungseinrichtung weist deshalb vorzugsweise einen solchen Hochspannungsbereich auf, der im Betrieb der Beschichtungseinrichtung unter Hochspannung (z.B. mehr als 1 kV, 10kV oder 50 kV) steht und der beispielsweise eine elektrostatische Beschichtungsmittelaufladung enthält, wie es an sich aus dem Stand der Technik bekannt ist. Darüber hinaus weist die erfindungsgemäße Beschichtungseinrichtung vorzugsweise einen elektrisch geerdeten Bereich auf, wie es ebenfalls an sich aus dem Stand der Technik bekannt ist. Der elektrische Verbraucher ist hierbei innerhalb des Hochspannungsbereichs angeordnet und das Übertragungssystem überträgt die zum Betrieb des Verbrauchers (z.B. Sensor) erforderliche elektrische Energie aus dem elektrisch geerdeten Bereich in den Hochspannungsbereich, insbesondere direkt zu dem Verbraucher. Die drahtlose Energieübertragung bewirkt hierbei gleichzeitig eine Potenzialtrennung zwischen dem elektrisch geerdeten Bereich einerseits und dem Hochspannungsbereich andererseits.

Das erfindungsgemäße Prinzip eines drahtlosen Übertragungssystems eignet sich jedoch nicht nur zur Versorgung von Verbrauchern in einem Hochspannungsbereich, sondern kann auch zur Versorgung von Verbrauchern in einem explosionsgeschützten Bereich eingesetzt werden. So weisen Beschichtungseinrichtungen oftmals explosionsgeschützte Bereiche auf, die üblicherweise als abgeschlossener Raum ausgebildet sind und beispielsweise mit einem Gas gespült werden können, um die Bildung eines explosionsfähigen Gasgemischs zu vermeiden. Die technischen Details von Explosionsgeschützten Bereichen sind beispielsweise in der technischen Norm DIN EN 60079-2 und in den ATEX-Richtlinien 2014/34/EU, 1999/92/EG (ATEX: ATmosphères EXplosibles) der Europäischen Union (EU) niedergelegt. Der im Rahmen der Erfindung verwendete Begriff eines explosionsgeschützten Bereichs ist deshalb vorzugsweise gemäß dieser technischen Norm bzw. Richtlinie zu verstehen. Die erfindungsgemäße Beschichtungseinrichtung kann deshalb in einer Erfindungsvariante einen explosionsgeschützten Bereich aufweisen, der vorzugsweise als abgeschlossener Raum innerhalb der Beschichtungseinrichtung ausgebildet ist. Der Verbraucher ist hierbei innerhalb des explosionsgeschützten Bereichs angeordnet und das Übertragungssystem überträgt die zum Betrieb des Verbrauchers erforderliche elektrische Energie von außerhalb des explosionsgeschützten Bereichs drahtlos in den explosionsgeschützten Bereich hinein, insbesondere direkt zu dem Verbraucher. Beispielsweise können in dem distalen Roboterarm ("Arm 2", "Applikationsarm") eines Lackierroboters elektrische Verbraucher angeordnet sein, die sich dann in einem explosionsgeschützten Bereich befinden. Das drahtlose Übertragungssystem kann dann elektrische Energie und/oder Daten aus dem explosionsgeschützten Bereich heraus und/oder in den explosionsgeschützten Bereich hinein übertragen.

Die Erfindung umfasst also zwei verschiedene Varianten, nämlich zum einen die Versorgung eines elektrischen Verbrauchers in einem Hochspannungsbereich und zum anderen die Versorgung eines Verbrauchers in einem explosionsgeschützten Bereich. Diese beiden Varianten können im Rahmen der Erfindung auch miteinander kombiniert werden. Beispielsweise kann es sich bei dem Hochspannungsbereich mindestens teilweise um einen explosionsgeschützten Bereich handeln, in dem der Verbraucher angeordnet ist, der von dem Übertragungssystem drahtlos mit der zum Betrieb erforderlichen elektrischen Energie versorgt wird. Es ist jedoch alternativ auch möglich, dass der Hochspannungsbereich nicht explosionsgeschützt ist oder dass der explosionsgeschützte Bereich keinen Hochspannungsbereich aufweist. Auch in diesen alternativ möglichen Fällen bietet die Erfindung wesentliche Vorteile.

Es wurde vorstehend bereits erwähnt, dass das Übertragungssystem drahtlos arbeitet, nämlich im Rahmen einer induktiven Kopplung oder einer resonant-induktiven Kopplung.

Bei einer induktiven Kopplung weist das Übertragungssystem eine Sendespule und eine Empfangsspule auf, die induktiv miteinander gekoppelt sind und somit eine Energieübertragung von der Sendespule zu der Empfangsspule ermöglichen. Die Sendespule ist hierbei in dem elektrisch geerdeten Bereich bzw. außerhalb des explosionsgeschützten Bereichs angeordnet. Die Empfangsspule ist dagegen in dem Hochspannungsbereich bzw. in dem explosionsgeschützten Bereich angeordnet. Zwischen der Sendespule und der Empfangsspule liegt hierbei vorzugsweise eine hochspannungsfeste Isolierstrecke zur elektrischen Isolierung der Sendespule gegenüber der Empfangsspule, so dass die Sendespule auf Erdpotenzial liegen kann, während die Empfangsspule auf Hochspannungspotenzial liegen kann.

Darüber hinaus weist das Übertragungssystem hierbei vorzugsweise einen Oszillator auf, der an die Sendespule angeschlossen ist und ebenfalls in dem elektrisch geerdeten Bereich oder außerhalb des explosionsgeschützten Bereichs angeordnet ist. Der Oszillator steuert die Sendespule mit einem Wechselspannungssignal an, das beispielsweise eine Frequenz von 10 kHz bis in den MHz-Bereich haben kann. Hierbei sind Reichweiten (d.h. Abstand zwischen Sendespule und Empfangsspule) möglich, die von wenigen Zentimetern bei der induktiven Kopplung bis zu mehreren Metern bei der resonant-induktiven Kopplung reichen.

Ferner verfügt die erfindungsgemäße Beschichtungseinrichtung vorzugsweise über einen Gleichrichter, der an die Empfangsspule angeschlossen und in dem Hochspannungsbereich bzw. in dem explosionsgeschützten Bereich angeordnet ist. Der Gleichrichter nimmt das von der Empfangsspule erzeugte Wechselstromsignal auf und erzeugt hieraus ein Gleichstromsignal für die Stromversorgung des Verbrauchers.

Es wurde bereits vorstehend erwähnt, dass das Übertragungssystem nicht nur Energie, sondern auch Daten übertragen kann. Hierbei ist zunächst zu erwähnen, dass die Datenübertragung unidirektional oder bidirektional erfolgen kann. Bei einer unidirektionalen Datenübertragung bestehen zwei Möglichkeiten. Eine Möglichkeit sieht vor, dass die Daten nur in Richtung zu dem Verbraucher übertragen werden. Eine andere Möglichkeit sieht dagegen vor, dass die Daten nur von dem Verbraucher ausgehend übertragen werden, beispielsweise zu einer zentralen Auswertungseinheit.

Hinsichtlich der zu übertragenden Daten bestehen im Rahmen der Erfindung verschiedene Möglichkeiten. Beispielsweise kann Firmware übertragen werden, die auf dem Verbraucher installiert wird. Auf diese Weise kann die auf dem Verbraucher installierte Firmware einfach aktualisiert werden.

Weiterhin besteht die Möglichkeit, dass es sich bei den Daten um Prozessdaten handelt, die durch mindestens einen Sensor erzeugt werden und den aktuellen Zustand eines Prozesses mindestens eines Teils der Beschichtungseinrichtung wiedergeben. Beispielsweise kann es sich bei dem Sensor um einen Drucksensor handeln, jedoch sind auch andere Sensortypen möglich, wie noch detailliert beschrieben wird. Bei den übertragenen Prozessdaten kann es sich also beispielsweise um Druckwerte (z.B. Lackdruck, Lenkluftdruck, Antriebsluftdruck, Bremsluftdruck), Strömungsmengenwerte (z.B. Lackstrom, Lenkluftstrom, Antriebsluftstrom, Bremsluftstrom), Spannungswerte (z.B. Ladespannung einer elektrostatischen Beschichtungsmittelaufladung) oder Stromwerte (z.B. Ladestrom einer elektrostatischen Beschichtungsmittelaufladung) handeln.

Ferner kann es sich bei den übertragenen Daten um eine Produkt-Identifikationskennung handeln, die mindestens ein Bauteil der Beschichtungseinrichtung identifiziert. Die Übertragungseinrichtung kann dann die Produkt-Identifikationskennung auslesen und so beispielsweise Plagiate oder wartungsbedürftige Bauteile erkennen.

Darüber hinaus können die zu übertragenden Daten auch Konfigurationsdaten oder Parametrierdaten sein.

In einem bevorzugten Ausführungsbeispiel der Erfindung handelt es sich bei der Beschichtungseinrichtung um einen Beschichtungsroboter. Derartige Beschichtungsroboter sind an sich aus dem Stand der Technik bekannt und müssen deshalb nicht detailliert beschrieben werden. Es ist jedoch an dieser Stelle zu erwähnen, dass derartige Beschichtungsroboter mindestens einen Roboterarm aufweisen können, wobei typische Beschichtungsroboter über einen proximalen Roboterarm ("Arm 1") und einen distalen Roboterarm ("Arm 2") verfügen. Der distale Roboterarm ist hierbei relativ zu dem proximalen Roboterarm schwenkbar und trägt an seinem Ende üblicherweise eine mehrachsige Roboterhandachse, wobei an der Roboterhandachse ein Applikationsgerät (z.B. Rotationszerstäuber oder Druckkopf) montiert sein kann.

Der Hochspannungsbereich bzw. der explosionsgeschützte Bereich ist hierbei vorzugsweise in einem der Roboterarm (z.B. "Arm 2") angeordnet.

Der elektrisch geerdete Bereich befindet sich dann vorzugsweise in demselben Roboterarm (z.B. "Arm 2") wie der Hochspannungsbereich.

Der Hochspannungsbereich ist hierbei in dem Roboterarm (z.B. "Arm 2") durch eine Isolierstrecke (z.B. Trennwand aus Kunststoff) von dem elektrisch geerdeten Bereich getrennt.

Die Sendespule und die Empfangsspule können dann auch in dem Roboterarm (z.B. "Arm 2") angeordnet sein.

Darüber hinaus kann auch der elektrische Verbraucher in demselben Roboterarm (z.B. "Arm 2") angeordnet sein, wobei es sich beispielsweise um eine Sensor-Sammeleinrichtung handeln kann, die Messsignale von mehreren Sensoren sammelt, wobei die Sensor-Sammeleinrichtung vorzugsweise in dem distalen Roboterarm angeordnet ist.

Ferner kann die Beschichtungseinrichtung auch eine Hochspannungskaskade zur elektrostatischen Beschichtungsmittelaufladung aufweisen, die dann vorzugsweise in dem proximalen Roboterarm angeordnet ist.

Im Folgenden werden nun zwei mögliche Einbaubeispiele für einen Beschichtungsroboter beschrieben.

In einem ersten Einbaubeispiel enthält der distale Roboterarm ("Arm 2") die wesentlichen Bauteile, nämlich die Sendespule, die Empfangsspule, die Isolierstrecke und den Verbraucher.

In einem anderen Ausführungsbeispiel sind die wesentlichen Bauteile dagegen in dem proximalen Roboterarm ("Arm 1") angeordnet, nämlich die Sendespule, die Empfangsspule, die Isolierstrecke und die Hochspannungskaskade.

Bei dem vorstehend erwähnten Sensor kann es sich beispielsweise um einen Drucksensor handeln, insbesondere an einer Dosierpumpe, die das Beschichtungsmittel dosiert. Hierbei können auch zwei Drucksensoren vorgesehen sein, die den Beschichtungsmitteldruck stromaufwärts vor der Dosierpumpe und stromabwärts hinter der Dosierpumpe messen. Alternativ kann auch ein Strömungssensor, ein Drehzahlsensor, ein Kraftsensor, ein Beschleunigungssensor, ein Vibrationssensor oder ein Temperatursensor eingesetzt werden, um nur einige Beispiele zu nennen.

Weiterhin kann es sich bei dem elektrischen Verbraucher um ein elektrisch betätigtes Ventil handeln, wie beispielsweise ein Lenkluftventil, ein Beschichtungsmittelventil, ein Antriebsluftventil eines pneumatischen angetriebenen Rotationszerstäubers oder ein Bremsluftventil eines pneumatischen angetriebenen Rotationszerstäubers.

Ferner ist es möglich, dass es sich bei dem Verbraucher um einen Sender zum Senden von Daten oder um einen Empfänger zum Empfangen von Daten handelt.

Die Erfindung ist jedoch hinsichtlich des Typs des elektrisch betriebenen Verbrauchers nicht auf die vorstehend genannten Beispiele beschränkt.

Weiterhin ist zu erwähnen, dass die erfindungsgemäße Beschichtungseinrichtung anstelle eines Beschichtungsroboters oder zusätzlich dazu auch einen anderen Manipulator aufweisen kann, z.B. eine Flächenmaschine, einen Flächenautomaten oder ein Mehrachsportal.

Ferner ist allgemein zu erwähnen, dass sich der elektrische Verbraucher in unmittelbarer Nähe der Empfangseinheit (z.B. Empfangsspule) des drahtlosen Übertragungssystems befinden kann. Es ist jedoch alternativ auch möglich, dass der elektrische Verbraucher von der Empfangseinheit (z.B. Empfangsspule) des drahtlosen Übertragungssystems räumlich getrennt ist, wobei dann eine Verbindungsleitung den elektrischen Verbraucher mit der Empfangseinheit (z.B. Empfangsspule) des drahtlosen Übertragungssystems verbindet.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.
Figur 1 zeigt eine schematische Darstellung einer Beschichtungseinrichtung mit einem Hochspannungsbereich und einem elektrisch geerdeten Bereich und einer drahtlosen Energieübertragung zwischen den beiden Bereichen.
Figur 2 zeigt den Einsatz der Übertragungseinrichtung gemäß Figur 1 in einem Lackierroboter.
Figur 3A zeigt eine Abwandlung von Figur 2, wobei die Übertragungseinrichtung in dem proximalen Roboterarm (" Arm 1") angeordnet ist.
Figur 3B zeigt die Übertragungseinrichtung aus Figur 3A in einer schematischen Detaildarstellung.
Figur 4A zeigt eine Perspektivansicht einer Dosierpumpe für eine Beschichtungseinrichtung mit einem Druckmessmodul zur Druckmessung.
Figur 4B zeigt eine Perspektivansicht des Druckmessmoduls der Dosierpumpe aus Figur 4A.

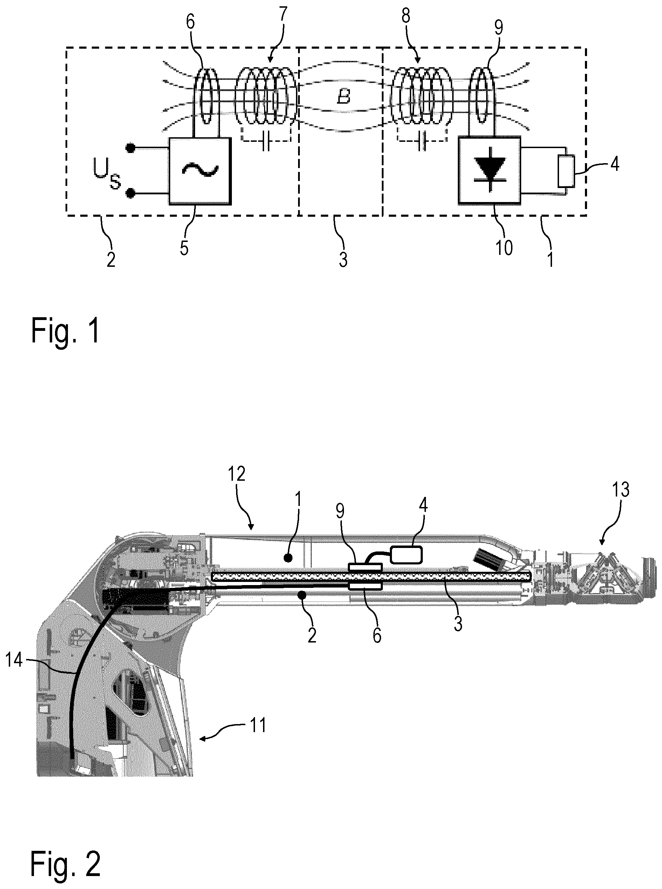

Im Folgenden wird nun die schematische Darstellung einer erfindungsgemäßen Beschichtungseinrichtung gemäß Figur 1 beschrieben. Beispielsweise kann es sich hierbei um einen Lackierroboter zur Lackierung von Kraftfahrzeugkarosseriebauteilen handeln, der als Applikationsgerät einen Rotationszerstäuber mit einer elektrostatischen Beschichtungsmittelaufladung aufweist.

Die Beschichtungseinrichtung weist einen Hochspannungsbereich 1 auf, die im Betrieb aufgrund der elektrostatischen Beschichtungsmittelaufladung auf einem Hochspannungspotenzial von mehreren 10 kV liegt.

Darüber hinaus weist die Beschichtungseinrichtung einen elektrisch geerdeten Bereich 2 auf, der im Betrieb auf Erdpotenzial liegt.

Zwischen dem geerdeten Bereich 2 und dem Hochspannungsbereich 1 liegt hierbei eine Isolierstrecke 3, die den Hochspannungsbereich 1 gegenüber dem elektrisch geerdeten Bereich 2 isoliert.

In dem Hochspannungsbereich 1 befindet sich hierbei ein elektrischer Verbraucher 4, wobei es sich beispielsweise um einen elektrisch betriebenen Drucksensor handeln kann.

In dem geerdeten Bereich 2 befindet sich ein Oszillator 5, der eine Sendespule 6 mit einem Hochfrequenzsignal ansteuert, wobei die Sendespule 6 einen Resonanzkreis 7 in dem elektrisch geerdeten Bereich 2 anregt.

In dem Hochspannungsbereich 1 befindet sich ein entsprechend abgestimmter weiterer Resonanzkreis 8, der neben einer Empfangsspule 9 angeordnet ist.

Die Empfangsspule 9 ist hierbei über die Resonanzkreise 7, 8 mit der Sendespule 6 resonant-induktiv gekoppelt. Dies bedeutet, dass der Oszillator 5 Hochfrequenzenergie erzeugt, die über die induktive Kopplung zu der Empfangsspule 9 gelangt und dort von einem Gleichrichter 10 gleichgerichtet wird. Der Gleichrichter 10 versorgt dann den Verbraucher 4 mit der zum Betrieb erforderlichen elektrischen Energie.

Hierbei ist zu erwähnen, dass der Hochspannungsbereich 1 auch ein explosionsgeschützter Bereich gemäß der technischen Norm DIN EN 60079-2 ist. Die konstruktiven Details derartiger explosionsgeschützter Räume sind an sich aus dem Stand der Technik bekannt und müssen deshalb nicht näher beschrieben werden. Die Energieübertragung durch die induktive Kopplung bietet hier auch den Vorteil, dass der Explosionsschutz in dem Hochspannungsbereich 1 durch die Energieübertragung nicht beeinträchtigt wird.

Figur 2 zeigt ein Einbaubeispiel der erfindungsgemäßen Beschichtungseinrichtung gemäß Figur 1 in einem Lackierroboter zur Lackierung von Kraftfahrzeugkarosseriebauteilen. Zur Vermeidung von Wiederholungen wird hierbei auf die vorstehende Beschreibung zu Figur 1 verwiesen, wobei für entsprechende Einzelheiten dieselben Bezugszeichen verwendet werden.

Der Lackierroboter weist zunächst einen proximalen Roboterarm 11 ("Arm 1") und einen distalen Roboterarm 12 (" Arm 2") auf, wobei der distale Roboterarm 12 relativ zu dem proximalen Roboterarm 11 schwenkbar ist.

Am Ende des distalen Roboterarms 12 ist eine mehrachsige Roboterhandachse 13 montiert, die im Betrieb das Applikationsgerät trägt, wie beispielsweise einen Rotationszerstäuber oder einen Druckkopf.

Der Hochspannungsbereich 1 und der geerdete Bereich 2 befinden sich hierbei innerhalb des distalen Roboterarms 12, wobei sich die Isolierstrecke 3 als Trennwand aus einem elektrisch isolierenden Material (z.B. Kunststoff) zwischen dem Hochspannungsbereich 1 und dem geerdeten Bereich 2 entlang dem distalen Roboterarm 12 erstreckt.

Darüber hinaus befindet sich in dem Hochspannungsbereich 1 in dem distalen Roboterarm 12 auch der elektrische Verbraucher 4 (z.B. Sensor, Sensor-Sammelbox).

Weiterhin zeigt die Zeichnung eine Versorgungsleitung 14, die zu dem hier nicht dargestellten Oszillator 5 führt.

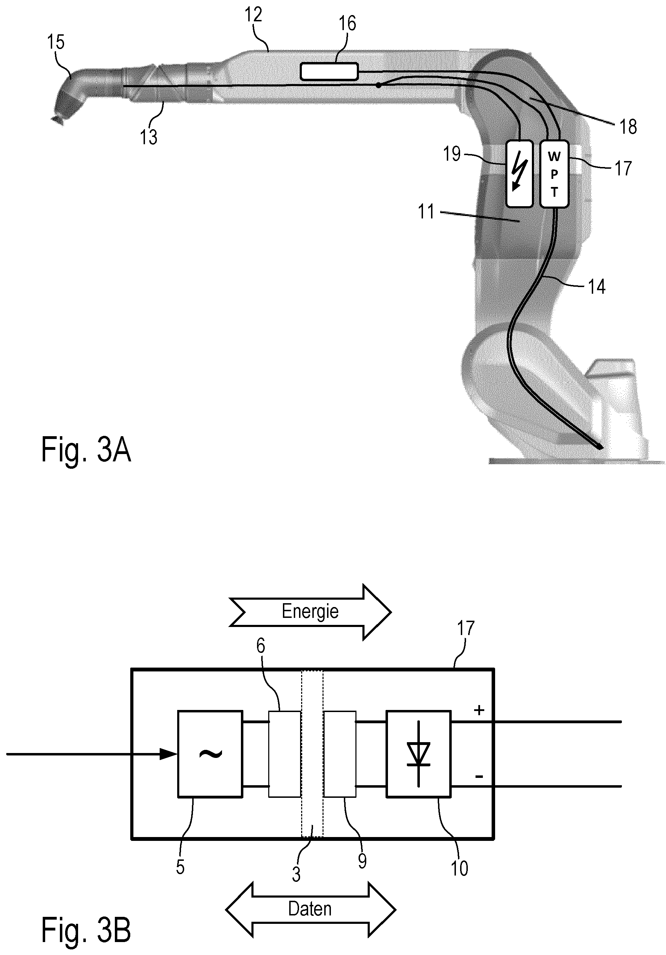

Die Figuren 3A und 3B zeigen ein anderes Ausführungsbeispiel in einem Lackierroboter, wobei zur Vermeidung von Wiederholungen wieder auf die vorstehende Beschreibung verwiesen wird, wobei für entsprechende Einzelheiten dieselben Bezugszeichen verwendet werden.

In Figur 3A ist zusätzlich zu sehen, dass an der Roboterhandachse 13 ein Rotationszerstäuber 15 montiert ist.

Weiterhin ist in dem distalen Roboterarm 12 hierbei eine Sensor-Sammel-Box 16 angeordnet, die mit mehreren Sensoren in dem Lackierroboter verbunden ist, wobei die Sensoren zur Vereinfachung nicht dargestellt sind.

In dem proximalen Roboterarm 11 befindet sich das eigentliche Übertragungssystem 17, das hierbei als eine Einheit ausgebildet ist, die in Figur 3B dargestellt ist und noch beschrieben wird.

Weiterhin zeigt Figur 3A eine Schwenkgelenk 18 zwischen dem proximalen Roboterarm 11 und dem distalen Roboterarm 12.

Darüber hinaus ist erkennbar, dass in dem proximalen Roboterarm 11 eine Hochspannungskaskade 19 angeordnet ist, die zur elektrostatischen Beschichtungsmittelaufladung dient.

Figur 3B zeigt den Aufbau des Übertragungssystems 17, das weitgehend entsprechend dem Aufbau gemäß Figur 1 funktioniert, so dass zur Vermeidung von Wiederholungen auf die vorstehende Beschreibung zu Figur 1 verwiesen wird.

Aus Figur 3B ist jedoch ersichtlich, dass das Übertragungssystem 17 nicht nur eine Energieübertragung ermöglicht, sondern auch eine bidirektionale Datenübertragung, wie durch den Doppelpfeil an der Unterseite erkennbar ist. Hierzu können die induktiv übertragenen Signale beispielsweise moduliert werden, wie es an sich aus dem Stand der Technik bekannt ist.

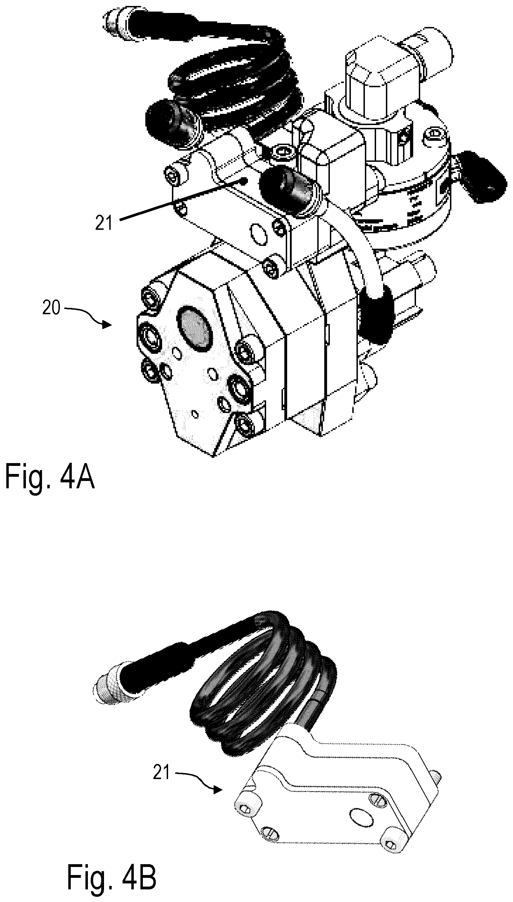

Schließlich zeigen die Figuren 4A und 4B verschiedene Perspektivansichten einer Dosierpumpe 20 mit einem Druckmessmodul 21, wobei die Dosierpumpe 20 zur Dosierung von Lack für einen Lackierroboter eingesetzt werden kann und sich beispielsweise in einem Hochspannungsbereich befinden kann. Das Druckmessmodul 21 kann dann den Beschichtungsmitteldruck stromaufwärts vor der Dosierpumpe 20 und stromabwärts hinter dir Dosierpumpe durch Drucksensoren messen, wobei die Drucksensoren elektrisch betrieben sind und mit dem erfindungsgemäßen Übertragungssystem mit der zum Betrieb erforderlichen elektrischen Energie versorgt werden. Darüber hinaus erfolgt auch die Datenabfrage von dem Druckmessmodul 21 mit dem erfindungsgemäßen Übertragungssystem.

### Bezugszeichenliste:

- 1: Hochspannungsbereich
- 2: Geerdeter Bereich
- 3: Isolierstrecke
- 4: Elektrischer Verbraucher
- 5: Oszillator zur Ansteuerung der Sendespule
- 6: Sendespule
- 7: Resonanzkreis der Sendespule
- 8: Resonanzkreis der Empfangsspule
- 9: Empfangsspule
- 10: Gleichrichter an der Empfangsspule
- 11: Proximaler Roboterarm des Lackierroboters ("Arm 1")
- 12: Distaler Roboterarm des Lackierroboters ("Arm 2")
- 13: Roboterhandachse
- 14: Versorgungsleitung zur Sendespule
- 15: Rotationszerstäuber
- 16: Sensor-Sammel-Box
- 17: Übertragungssystem
- 18: Schwenkgelenk
- 19: Hochspannungskaskade
- 20: Dosierpumpe
- 21: Druckmessmodul

## Patentansprüche

1. Beschichtungseinrichtung zur Beschichtung von Bauteilen, insbesondere zur Lackierung von Kraftfahrzeugkarosseriebauteilen, mit
a) einem Hochspannungsbereich (1) oder einem explosionsgeschützten Bereich,
b) einem elektrisch geerdeten Bereich (2),
c) mindestens einem innerhalb des Hochspannungsbereichs (1) und/oder innerhalb des explosionsgeschützten Bereichs angeordneten elektrischen Verbraucher (4), der zum Betrieb elektrische Energie benötigt, und
d) einem Übertragungssystem (5-10; 17) zur drahtlosen Übertragung der zum Betrieb des mindestens einen Verbrauchers (4) erforderlichen elektrischen Energie zu dem Verbraucher (4) und/oder zur Übertragung von Daten von und/oder zu dem mindestens einen Verbraucher (4), mittels
d1) einer Sendespule (6) und
d2) einer Empfangsspule (9), die in dem Hochspannungsbereich (1) oder in dem explosionsgeschützten Bereich angeordnet ist,
**dadurch gekennzeichnet,**
e) **dass** die Sendespule (6) in dem elektrisch geerdeten Bereich (2) oder außerhalb des explosionsgeschützten Bereichs angeordnet ist.

2. Beschichtungseinrichtung nach Anspruch 1, **dadurch gekennzeichnet,**
a) **dass** die Beschichtungseinrichtung den elektrisch geerdeten Bereich (2) aufweist,
b) **dass** die Beschichtungseinrichtung den Hochspannungsbereich (1) aufweist, der im Betrieb der Beschichtungseinrichtung unter Hochspannung steht, insbesondere für eine elektrostatische Beschichtungsmittelaufladung,
c) **dass** der Verbraucher (4) innerhalb des Hochspannungsbereichs (1) angeordnet ist, und
d) **dass** das Übertragungssystem (5-10; 17) die zum Betrieb des Verbrauchers (4) erforderliche elektrische Energie aus dem elektrisch geerdeten Bereich (2) in den Hochspannungsbereich (1) überträgt, insbesondere direkt zu dem Verbraucher (4).

3. Beschichtungseinrichtung nach Anspruch 1 oder 2, **dadurch gekennzeichnet,**
a) **dass** die Beschichtungseinrichtung den explosionsgeschützten Bereich (1) aufweist, insbesondere gemäß DIN EN 60079-2 oder ATEX 2G, insbesondere als abgeschlossener Raum innerhalb der Beschichtungseinrichtung,
b) **dass** der Verbraucher (4) innerhalb des explosionsgeschützten Bereichs (1) angeordnet ist,
und
c) **dass** das Übertragungssystem (5-10; 17) die zum Betrieb des Verbrauchers (4) erforderliche elektrische Energie von außerhalb des explosionsgeschützten Bereichs (1) in den explosionsgeschützten Bereich (1) überträgt, insbesondere direkt zu dem Verbraucher (4).

4. Beschichtungseinrichtung nach einem der vorhergehenden Ansprüche, **dadurch gekennzeichnet, dass** das Übertragungssystem (5-10; 17) mit einer der folgende Kopplungen arbeitet:
a) induktive Kopplung,
b) resonant-induktive Kopplung.

5. Beschichtungseinrichtung nach einem der vorhergehenden Ansprüche, **gekennzeichnet durch** eine hochspannungsfeste Isolierstrecke (3) zwischen der Sendespule (6) und der Empfangsspule (9) zur elektrischen Isolierung der Sendespule (6) gegenüber der Empfangsspule (9).

6. Beschichtungseinrichtung nach einem der vorhergehenden Ansprüche, **dadurch gekennzeichnet, dass** das Übertragungssystem (5-10; 17) folgendes aufweist:
a) einen Oszillator (5), der an die Sendespule (6) angeschlossen und in dem elektrisch geerdeten Bereich (2) oder außerhalb des explosionsgeschützten Bereichs angeordnet ist, und
b) einen Gleichrichter (10), der an die Empfangsspule (9) angeschlossen und in dem Hochspannungsbereich (1) oder in dem explosionsgeschützten Bereich (10) angeordnet ist.

7. Beschichtungseinrichtung nach einem der vorhergehenden Ansprüche, **dadurch gekennzeichnet, dass** das Übertragungssystem (5-10; 17) sowohl zur drahtlosen Übertragung der zum Betrieb des Verbrauchers (4) erforderlichen elektrischen Energie als auch zur Übertragung von Daten von und/oder zu dem Verbraucher (4) eingerichtet ist.

8. Beschichtungseinrichtung nach Anspruch 5, **dadurch gekennzeichnet, dass** das die übertragenen Daten folgende Daten umfassen:
a) Firmware, die auf dem Verbraucher (4) installiert wird,
b) Prozessdaten, die durch mindestens einen Sensor erzeugt werden und den aktuellen Zustand eines Prozesses mindestens eines Teils der Beschichtungseinrichtung wiedergeben,
c) eine Produkt-Identifikationskennung, die mindestens ein Bauteil der Beschichtungseinrichtung identifiziert, und/oder
d) Konfigurationsdaten oder Parametrierdaten.

9. Beschichtungseinrichtung nach einem der Ansprüche 5 bis 8,
**dadurch gekennzeichnet,**
a) **dass** die Beschichtungseinrichtung einen Beschichtungsroboter aufweist mit mindestens einem Roboterarm (11, 12), insbesondere mit einem proximalen Roboterarm (11), einem distalen Roboterarm (12) und einer Roboterhandachse (13), und/oder
b) **dass** der Hochspannungsbereich (1) und/oder der explosionsgeschützte Bereich (1) mindestens teilweise in dem Roboterarm (11, 12) angeordnet ist, und/oder
c) **dass** der elektrisch geerdete Bereich (2) mindestens teilweise in dem Roboterarm (11, 12) angeordnet ist, und/oder
d) **dass** die Isolierstrecke (3) den elektrisch geerdeten Bereich (2) von dem Hochspannungsbereich (1) trennt und in dem Roboterarm (11, 12) angeordnet ist, insbesondere in dem proximalen Roboterarm (11) oder in dem distalen Roboterarm (12), und/oder
e) **dass** die Sendespule (6) und die Empfangsspule (9) in dem Roboterarm (11, 12) angeordnet sind, insbesondere in dem proximalen Roboterarm (11) oder in dem distalen Roboterarm (12), und/oder
f) **dass** der Verbraucher (4) in dem Roboterarm (11, 12) angeordnet ist, insbesondere in dem proximalen Roboterarm oder in dem distalen Roboterarm, und/oder
g) **dass** der Verbraucher (4) eine Sensor-Sammeleinrichtung (16) ist, die Messsignale von mehreren Sensoren sammelt, wobei die Sensor-Sammeleinrichtung (16) vorzugsweise in dem distalen Roboterarm angeordnet ist, und/oder
h) **dass** die Beschichtungseinrichtung zur elektrostatischen Beschichtungsmittelaufladung eine Hochspannungskaskade (19) aufweist, die vorzugsweise in dem proximalen Roboterarm (11) angeordnet ist.

10. Beschichtungseinrichtung nach Anspruch 9,
**dadurch gekennzeichnet,**
a) **dass** folgende Bauteile in dem distalen Roboterarm (12) angeordnet sind, der kinematisch zwischen dem proximalen Roboterarm (11) und der Roboterhandachse (13) angeordnet ist:
a1) die Sendespule (6),
a2) die Empfangsspule (9),
a3) die Isolierstrecke (3) und
a4) der Verbraucher (4), oder
b) **dass** folgende Bauteile in dem proximalen Roboterarm (11) angeordnet sind, der kinematisch vor dem distalen Roboterarm (12) angeordnet ist:
b1) die Sendespule (6),
b2) die Empfangsspule (9),
b3) die Isolierstrecke (3) und
b4) die Hochspannungskaskade.

11. Beschichtungseinrichtung nach einem der vorhergehenden Ansprüche, **dadurch gekennzeichnet, dass** die Beschichtungseinrichtung einen der folgenden Manipulatoren aufweist, um einen Applikator zu bewegen:
a) Flächenmaschine,
b) Flächenautomat,
c) Mehrachsportal.

12. Beschichtungseinrichtung nach einem der vorhergehenden Ansprüche, **gekennzeichnet durch** folgende Verbraucher (4):
a) Sensor, insbesondere
a1) Drucksensor, insbesondere an einer Dosierpumpe, die das Beschichtungsmittel dosiert,
a2) Strömungssensor,
a3) Drehzahlsensor,
a4) Kraftsensor,
a5) Beschleunigungssensor,
a6) Vibrationssensor,
a7) Temperatursensor,
b) elektrisch betätigtes Ventil, insbesondere Lenkluftventil, Beschichtungsmittelventil, Antriebsluftventil, Bremsluftventil,
c) Sender zum Senden von Daten, und/oder
d) Empfänger zum Empfangen von Daten.

## Claims

1. Coating device for coating components, in particular for painting motor vehicle body components, comprising
a) a high-voltage zone (1) or an explosion-proof zone (1),
b) an electrically grounded zone (2),
c) at least one electrical consumer (4) arranged within the high-voltage zone (1) and/or within the explosion-proof zone (1), which requires electrical energy for operation, and
d) a transmission system (5-10; 17) for wireless transmission of the electrical energy required for operation of the at least one consumer (4) to the consumer (4) and/or for transmission of data from and/or to the at least one consumer (4) by means of
d1) a transmitting coil (6) and
d2) a receiving coil (9) arranged in the high-voltage zone (1) or in the explosion-proof zone, **characterized in**
e) **that** the transmitting coil (6) arranged in the electrically grounded zone (2) or outside the explosion-proof zone.

2. Coating device according to claim 1, **characterized in,**
a) **that** the coating device comprises the electrically grounded zone (2),
b) **that** the coating device comprises the high-voltage zone (1) which is under high voltage during operation of the coating device, in particular for electrostatic coating agent charging,
c) **that** the consumer (4) is arranged within the high-voltage zone (1), and
d) **that** the transmission system (5-10; 17) transmits the electrical energy required to operate the consumer (4) from the electrically grounded zone (2) into the high-voltage zone (1), in particular directly to the consumer (4).

3. Coating device according to claim 1 or 2, **characterized,**
a) that the coating device comprises the explosion-proof zone (1), in particular in accordance with DIN EN 60079-2 or ATEX 2G, in particular as an enclosed space within the coating device,
b) that the consumer (4) is arranged within the explosion-proof zone (1), and
c) that the transmission system (5-10; 17) transmits the electrical energy required to operate the consumer (4) from outside the explosion-proof zone (1) into the explosion-proof zone (1), in particular directly to the consumer (4).

4. Coating device according to one of the preceding claims, **characterized in that** the transmission system (5-10; 17) operates with one of the following couplings:
a) inductive coupling,
b) resonant-inductive coupling.

5. Coating device according to any of the preceding claims, **characterized by** a high-voltage proof insulating section (3) between the transmitting coil (6) and the receiving coil (9) for electrically insulating the transmitting coil (6) from the receiving coil (9).

6. Coating device according to one of the preceding claims, **characterized in that** the transmission system (5-10; 17) comprises:
a) an oscillator (5) connected to the transmitting coil (6) and arranged in the electrically grounded zone (2) or outside the explosion-proof zone, and
b) a rectifier (10) which is connected to the receiving coil (9) and is arranged in the high-voltage zone (1) or in the explosion-proof zone (10).

7. Coating device according to one of the preceding claims, **characterized in that** the transmission system (5-10; 17) is set up both for wireless transmission of the electrical energy required for operating the consumer (4) and for transmission of data from and/or to the consumer (4).

8. Coating device according to claim 5, **characterized in that** the transmitted data comprises the following data:
a) firmware installed on the consumer (4),
b) process data generated by at least one sensor and reflecting the current state of a process of at least a part of the coating device,
c) a product identification code which identifies at least one component of the coating device, and/or
d) configuration data or parameterization data.

9. Coating device according to one of the claims 5 to 8, **characterized in,**
a) **that** the coating device comprises a coating robot with at least one robot arm (11, 12), in particular with a proximal robot arm (11), a distal robot arm (12) and a robot hand axis (13), and/or
b) **that** the high-voltage zone (1) and/or the explosion-proof zone (1) is arranged at least partially in the robot arm (11, 12), and/or
c) **that** the electrically grounded zone (2) is arranged at least partially in the robot arm (11, 12), and/or
d) **that** the insulating section (3) separates the electrically grounded zone (2) from the high-voltage zone (1) and is arranged in the robot arm (11, 12), in particular in the proximal robot arm (11) or in the distal robot arm (12), and/or
e) **that** the transmitting coil (6) and the receiving coil (9) are arranged in the robot arm (11, 12), in particular in the proximal robot arm (11) or in the distal robot arm (12), and/or
f) **that** the consumer (4) is arranged in the robot arm (11, 12), in particular in the proximal robot arm or in the distal robot arm, and/or
g) **that** the consumer (4) is a sensor collecting device (16) which collects measurement signals from a plurality of sensors, the sensor collecting device (16) preferably being arranged in the distal robot arm, and/or
h) **that** the coating device for electrostatic coating agent charging comprises a high-voltage cascade (19), which is preferably arranged in the proximal robot arm (11).

10. Coating device according to claim 9, **characterized in**
a) **that** the following components are arranged in the distal robot arm (12), which is kinematically arranged between the proximal robot arm (11) and the robot hand axis (13):
a1) the transmitting coil (6),
a2) the receiving coil (9),
a3) the insulating section (3) and
a4) the consumer (4), or
b) **that** the following components are arranged in the proximal robot arm (11), which is kinematically arranged in front of the distal robot arm (12):
b1) the transmitting coil (6),
b2) the receiving coil (9),
b3) the insulating section (3) and
b4) the high-voltage cascade.

11. Coating device according to any one of the preceding claims, **characterized in that** the coating device comprises one of the following manipulators to move an applicator:
a) surface machine,
b) surface automat,
c) multi-axis gantry.

12. Coating device according to one of the preceding claims, **characterized by** the following consumers (4):
a) sensor, in particular
a1) pressure sensor, in particular on a metering pump which meters the coating agent,
a2) flow sensor,
a3) speed sensor,
a4) force sensor,
a5) acceleration sensor,
a6) vibration sensor,
a7) temperature sensor,
b) electrically actuated valve, in particular shaping air valve, coating agent valve, drive air valve, brake air valve,
c) transmitter for sending data, and/or
d) receiver for receiving data.

## Revendications

1. Dispositif de revêtement pour le revêtement de composants, en particulier pour la peinture de composants de carrosserie de véhicules automobiles, avec :
a) une zone haute tension (1) ou une zone antidéflagrante ;
b) une zone électriquement mise à la terre (2) ;
c) au moins un consommateur électrique (4), nécessitant de l'énergie électrique pour fonctionner, agencé à l'intérieur de la zone haute tension (1) et/ou à l'intérieur de la zone antidéflagrante ; et
d) un système de transmission (5-10 ; 17) pour la transmission sans fil de l'énergie électrique nécessaire au fonctionnement de l'au moins un consommateur (4) vers le consommateur (4) et/ou pour la transmission de données depuis et/ou vers l'au moins un consommateur (4), au moyen de :
d1) une bobine émettrice (6) ; et
d2) une bobine réceptrice (9), qui est agencée dans la zone haute tension (1) ou dans la zone antidéflagrante ;
**caractérisé en ce que** :
e) la bobine émettrice (6) est agencée dans la zone électriquement mise à la terre (2) ou en dehors de la zone antidéflagrante.

2. Dispositif de revêtement selon la revendication 1, **caractérisé en ce que** :
a) le dispositif de revêtement présente la zone électriquement mise à la terre (2) ;
b) le dispositif de revêtement présente la zone haute tension (1), qui est sous haute tension en fonctionnement du dispositif de revêtement, en particulier pour une charge électrostatique de l'agent de revêtement ;
c) le consommateur (4) est agencé à l'intérieur de la zone haute tension (1) ; et
d) le système de transmission (5-10 ; 17) transmet l'énergie électrique nécessaire au fonctionnement du consommateur (4) de la zone électriquement mise à la terre (2) vers la zone haute tension (1), en particulier directement vers le consommateur (4).

3. Dispositif de revêtement selon la revendication 1 ou 2, **caractérisé en ce que** :
a) le dispositif de revêtement présente la zone antidéflagrante (1), en particulier selon la norme DIN EN 60079-2 ou ATEX 2G, notamment comme un espace clos à l'intérieur du dispositif de revêtement ;
b) le consommateur (4) est agencé à l'intérieur de la zone antidéflagrante (1) ; et
c) le système de transmission (5-10 ; 17) transmet l'énergie électrique nécessaire au fonctionnement du consommateur (4) de l'extérieur de la zone antidéflagrante (1) vers la zone antidéflagrante (1), en particulier directement vers le consommateur (4).

4. Dispositif de revêtement selon l'une des revendications précédentes, **caractérisé en ce que** le système de transmission (5-10 ; 17) fonctionne avec l'un des couplages suivants :
a) couplage inductif ;
b) couplage inductif résonant.

5. Dispositif de revêtement selon l'une des revendications précédentes, **caractérisé par** une distance d'isolation haute tension (3) entre la bobine émettrice (6) et la bobine réceptrice (9) pour l'isolation électrique de la bobine émettrice (6) par rapport à la bobine réceptrice (9).

6. Dispositif de revêtement selon l'une des revendications précédentes, **caractérisé en ce que** le système de transmission (5-10 ; 17) comprend :
a) un oscillateur (5), qui est connecté à la bobine émettrice (6) et est agencé dans la zone électriquement mise à la terre (2) ou en dehors de la zone antidéflagrante ; et
b) un redresseur (10), qui est connecté à la bobine réceptrice (9) et est agencé dans la zone haute tension (1) ou dans la zone antidéflagrante (10).

7. Dispositif de revêtement selon l'une des revendications précédentes, **caractérisé en ce que** le système de transmission (5-10 ; 17) est configuré à la fois pour la transmission sans fil de l'énergie électrique nécessaire au fonctionnement du consommateur (4) et pour la transmission de données depuis et/ou vers le consommateur (4).

8. Dispositif de revêtement selon la revendication 5, **caractérisé en ce que** les données transmises comprennent les données suivantes :
a) firmware, qui est installé sur le consommateur (4) ;
b) données de processus, qui sont générées par au moins un capteur et reflètent l'état actuel d'un processus d'au moins une partie du dispositif de revêtement ;
c) une identification de produit, qui identifie au moins un composant du dispositif de revêtement ; et/ou
d) données de configuration ou données de paramétrage.

9. Dispositif de revêtement selon l'une des revendications 5 à 8, **caractérisé en ce que** :
a) le dispositif de revêtement présente un robot de revêtement avec au moins un bras de robot (11, 12), en particulier avec un bras de robot proximal (11), un bras de robot distal (12) et un axe de main de robot (13) ; et/ou
b) la zone haute tension (1) et/ou la zone antidéflagrante (1) est/sont au moins partiellement agencée(s) dans le bras de robot (11, 12) ; et/ou
c) la zone électriquement mise à la terre (2) est au moins partiellement agencée dans le bras de robot (11, 12) ; et/ou
d) la distance d'isolation (3) sépare la zone électriquement mise à la terre (2) de la zone haute tension (1) et est agencée dans le bras de robot (11, 12), en particulier dans le bras de robot proximal (11) ou dans le bras de robot distal (12) ; et/ou
e) la bobine émettrice (6) et la bobine réceptrice (9) sont agencées dans le bras de robot (11, 12), en particulier dans le bras de robot proximal (11) ou dans le bras de robot distal (12) ; et/ou
f) le consommateur (4) est agencé dans le bras de robot (11, 12), en particulier dans le bras de robot proximal ou dans le bras de robot distal ; et/ou
g) le consommateur (4) est un dispositif de collecte de capteurs (16), qui collecte des signaux de mesure de plusieurs capteurs, le dispositif de collecte de capteurs (16) étant de préférence agencé dans le bras de robot distal ; et/ou
h) le dispositif de revêtement pour la charge électrostatique de l'agent de revêtement présente une cascade haute tension (19), qui est de préférence agencée dans le bras de robot proximal (11).

10. Dispositif de revêtement selon la revendication 9, **caractérisé en ce que** :
a) les composants suivants sont agencés dans le bras de robot distal (12), qui est cinématiquement agencé entre le bras de robot proximal (11) et l'axe de main de robot (13) :
a1)la bobine émettrice (6) ;
a2)la bobine réceptrice (9) ;
a3)la distance d'isolation (3) ; et
a4)le consommateur (4) ; ou
b) les composants suivants sont agencés dans le bras de robot proximal (11), qui est cinématiquement agencé avant le bras de robot distal (12) :
b1) la bobine émettrice (6) ;
b2) la bobine réceptrice (9) ;
b3) la distance d'isolation (3) ; et
b4) la cascade haute tension.

11. Dispositif de revêtement selon l'une des revendications précédentes, **caractérisé en ce que** le dispositif de revêtement présente l'un des manipulateurs suivants pour déplacer un applicateur :
a) machine à surfacer ;
b) automate à surfacer ;
c) portique multi-axes.

12. Dispositif de revêtement selon l'une des revendications précédentes, **caractérisé par** les consommateurs (4) suivants :
a) capteur, en particulier :
a1) capteur de pression, en particulier sur une pompe doseuse qui dose l'agent de revêtement ;
a2) capteur de débit ;
a3) capteur de vitesse de rotation ;
a4) capteur de force ;
a5) capteur d'accélération ;
a6) capteur de vibration ;
a7) capteur de température ;
b) valve à commande électrique, en particulier valve d'air de direction, valve d'agent de revêtement, valve d'air d'entraînement, valve d'air de freinage ;
c) émetteur pour l'envoi de données ; et/ou
d) récepteur pour la réception de données.
